# EUROPÄISCHE PATENTSCHRIFT

(11) **EP 1 617 725 B1**
(45) Veröffentlichungstag und Bekanntmachung des Hinweises auf die Patenterteilung: **21.03.2007**
(21) Anmeldenummer: 05726502.7
(22) Anmeldetag: 12.05.2005
(51) Int. Cl.: A22C 11/02

(54) **VORRICHTUNG UND VERFAHREN ZUR HERSTELLUNG VON NAHRUNGSMITTELPRODUKTEN MIT PASTÖSEM FÜLLGUT, INSBESONDERE VON WÜRSTEN**
DEVICE AND METHOD FOR PRODUCING FOODSTUFF PRODUCTS WITH PASTY FEEDSTOCK, PARTICULARLY SAUSAGES
DISPOSITIF ET PROCEDE POUR PRODUIRE DES PRODUITS ALIMENTAIRES A CHARGE PATEUSE, NOTAMMENT DES SAUCISSES

(30) Priorität: 14.05.2004 DE 102004024438
(43) Veröffentlichungstag der Anmeldung: 25.01.2006
(73) Patentinhaber: Food Processing Systems GmbH, 65203 Wiesbaden (DE)
(72) Erfinder: JAHNS, Marcus, 61348 Bad Homburg (DE)
(74) Vertreter: Engelmann, Kristiana
(86) Internationale Anmeldenummer: PCT/EP2005/005117
(87) Internationale Veröffentlichungsnummer: WO 2005/110098

(56) Entgegenhaltungen:
- DE-A1- 3 525 587
- DE-A1- 3 608 983
- US-A- 4 646 386
- US-A- 5 743 792
- US-B1- 6 216 425

## Beschreibung

Die Erfindung betrifft eine Vorrichtung nach dem Oberbegriff des Patentanspruchs 1 sowie ein Verfahren nach dem Oberbegriff des Patentanspruchs 18 zur Herstellung von Nahrungsmittelprodukten mit pastösem Füllgut, insbesondere von Würsten.

Eine derartige Vorrichtung und ein derartiges Verfahren ist aus z.B. US-A-5 743 792 bekannt.

Das Befüllen von schlauchförmigen Hüllen mit pastösem Füllgut ist insbesondere bei der Wurstherstellung bekannt. Dabei wird das Füllgut, z.B. Wurstbrät, in eine Fülleinrichtung gegeben, aus der das Füllgut durch ein Füllrohr in eine anfangsseitig verschlossene, schlauchförmige Hülle eingefüllt wird. Die Hülle umschließt das Füllrohr zumindest bereichsweise. Der sich füllende Hüllenbereich zieht durch den Impuls des Einfüllens weiteres Hüllenmaterial von einem Vorrat nach. Da das Hüllenmaterial auf dem Füllrohr in der Regel sehr gleitfähig ist, wird das Nachziehen der Hülle üblicherweise begrenzt. Hierzu wurde eine Hüllbremse entwickelt, die das Füllrohr und den darauf befindlichen Hüllenschlauch ringförmig umgibt und das Hüllenmaterial mit geringer, permanent gleichbleibender Andruckkraft auf das Füllrohr drückt. Nachdem die gewünschte Füllmenge des Wurstproduktes eingefüllt ist, wird eine Schließvorrichtung aktiviert, die das Ende der zuvor befüllten sowie den Anfang der als nächstes zu füllenden Hülle verschließt und voneinander trennt. Der Füllvorgang beginnt anschließend von neuem.

Die Füllmenge derartig hergestellter Wurstrodukte mit pastösem Füllgut ist stets gleich. Da jedoch der Durchmesser der schlauchförmigen Hülle geringfügig schwankt, ist die Länge des fertigen Wurstprodukts und des zu deren Herstellung jeweils verwendeten Hüllenmaterials unterschiedlich. In bestimmten Fällen ist jedoch die Herstellung von längenkonstanten Wurstprodukten erwünscht.

Aus der DE 36 08 983 C2 ist eine Vorrichtung zur Herstellung von Wurstprodukten mit einem aufgebrachten Bilddruck bekannt. Der Bilddruck ist vom Streudruck zu unterscheiden. Beim Streudruck wird der gleiche Aufdruck in verhältnismäßig kurzem Abstand auf einem zusammenhängenden Hüllenvorrat angebracht und die einzelnen, damit hergestellten Wurstprodukte haben diesen Aufdruck zumeist mehrfach, einige Aufdrucke jedoch oft nur teilweise. Beim Bilddruck hingegen ist auf jedem Wurstprodukt in der Regel nur ein Aufdruck und dieser immer vollständig.

Der Bilddruck auf dem Wurstprodukt in der DE 36 08 983 C2 hat stets einen gleichbleibenden Abstand von den Enden des Wurstprodukts. Hierzu sind an dem schlauchförmigen Hüllenmaterial zur Herstellung der Wurstprodukte in Abständen Markierungen angebracht, die im Verlauf der Bewegung der Hülle in Befüllrichtung eine Aktivierungsposition erreichen und dort von einer Sensoreinrichtung erkannt werden. Bei der Aktivierungsposition wird jeweils der Füllvorgang unterbrochen und das Ende der zuvor befüllten sowie der Anfang der als nächstes zu füllenden Hülle verschlossen und voneinander getrennt.

Die Länge des Hüllenmaterials zur Herstellung derartiger Wurstprodukte ist zwar stets konstant, die Wurstprodukte haben jedoch den Nachteil einer schwankenden Füllmenge, da der Durchmesser des Hüllenschlauches geringfügig variiert.

Die Erfindung befaßt sich mit dem Problem, eine Vorrichtung sowie ein Verfahren zur Herstellung von Nahrungsmittelprodukt mit pastösem Füllgut zu entwickeln, bei denen sowohl die Füllmenge als auch die Länge des verwendeten Hüllenmaterials je Nahrungsmittelprodukt stets gleichbleibend ist.

Die Erfindung löst dieses Problem durch eine Vorrichtung mit den Merkmalen des Patentanspruchs 1 sowie durch ein Verfahren mit den Merkmalen des Patentanspruchs 18.

Die erfindungsgemäße Vorrichtung weist eine Feststellbremse auf, die eine das Nachziehen der Hülle vollständig verhindernde Stoppstellung einnehmen kann und die zudem über eine erste Verbindung mit der Sensoreinrichtung und über eine zweite Verbindung mit der Fülleinrichtung verbunden ist. In der Stoppstellung der Feststellbremse ist es möglich, den Füllvorgang solange fortzusetzen, bis eine vorgegebene Füllmenge erreicht ist, ohne gleichzeitig weiteres Hüllenmaterial von einem Vorrat nachzuziehen. Dabei dehnt sich die Hülle aus. Sobald eine Markierung die Aktivierungsposition erreicht, wird von der Sensoreinrichtung über die erste Verbindung ein Aktivierungssignal an die Feststellbremse übermittelt und diese nimmt die Stoppstellung ein. Erst wenn eine vorgebbare Füllmenge erreicht ist, gibt die Fülleinrichtung über die zweite Verbindung ein Endsignal an die Feststellbremse ab und diese verläßt die Stoppstellung daraufhin wieder. Dabei kann die vorgebbare Füllmenge der Endfüllmenge des Nahrungsmittelprodukts oder Teilen der Endfüllmenge entsprechen. Die Füllmenge und die Länge des verwendeten Hüllenmaterials sind bei jedem so hergestellten Nahrungsmittelprodukt gleich.

Eine Ausgestaltung der Erfindung sieht vor, daß die Fülleinrichtung eine Steuerung für die Füllmenge aufweist und die Steuerung mit der Festellbremse über die zweite Verbindung und mit der Sensoreinrichtung über eine dritte Verbindung verbunden ist. Dadurch ist es möglich, das Stoppen der Nachziehbewegung an definierten Positionen mit der bis zu dieser Position erwünschten Füllmenge zu synchronisieren. Dies ist insbesondere dann von Vorteil, wenn die Schließvorrichtung nicht bei jeder Markierung bzw. in Verbindung mit jedem Aktivierungssignal tätig werden soll.

Die in der Steuerung eingestellte vorgebbare Füllmenge kann beispielsweise von der Anzahl der Markierungen abhängen, die die Aktivierungsposition seit Herstellungsbeginn des gerade in Herstellung befindlichen Nahrungsmittelprodukts bereits duchlaufen haben. Bei einem im wesentlichen zylindrischen Nahrungsmittelprodukt dessen Anfang und Ende mit einer Markierung zusammenfällt und das durch die auf ihm angebrachten Markierungen im wesentlichen in vier gleich große Zylinder unterteilt ist, könnte für die erste Markierung, die nach dem Verschließen des Hüllenanfangs ein Aktivierungssignal auslöst eine Füllmenge von 25 % der Endfüllmenge, für die zweite Markierung eine Füllmenge von 50 % der Endfüllmenge, für die dritte Markierung eine Füllmenge von 75 % der Endfüllmenge und für die vierte Markierung die Endfüllmenge des fertigen Nahrungsmittelprodukts vorgegeben sein. Anschließend beginnt das Abzählen erneut. Je nach Konsistenz des Füllguts, der Form des Nahrungsmittelprodukts oder sonstiger Herstellungsbedingungen kann es jedoch auch sinnvoll sein, daß die vorgegebene Füllmenge von dieser linearen Füllmenge abweicht und dadurch insgesamt das Füllergebnis verbessert ist.

Mit Hilfe dieser Ausgestaltung der Vorrichtung ist es möglich, das Stoppen der Hülle, bis eine vorgegebene Füllmenge erreicht ist, innerhalb einer Nahrungsmittelproduktlänge in mehrere Stopp-/ Nachfüllvorgänge zu unterteilen und dadurch sowohl eine gleichmäßigere Prallheit der befüllten Hülle und damit des Nahrungsmittelprodukts als auch eine gleichmäßigere Dehnung der Hülle über die gesamte Länge des Nahrungsmittelprodukts zu erreichen.

Alternativ oder ergänzend zu dieser Ausgestaltung können an der Hülle Markierungen verschiedener Art angebracht sein, wobei die Art einer Markierung jeweils von dem Abstand zu wenigstens einer weiteren Markierung abhängt. Die Art der Markierung wird von der Sensoreinrichtung erkannt und über die dritte Verbindung an die Steuerung der Fülleinrichtung signalisiert. Dabei gibt die Art der Markierung der Steuerung die vorgegebene Füllmenge an, wobei diese die Endfüllmenge des Nahrungsmittelprodukts sein kann und die Markierung daher eine Art Hauptmarkierung oder Endmarkierung bildet oder wobei die vorgegebene Füllmenge auch einem Bruchteil der Endfüllmenge entsprechen kann und die entsprechende Markierung deshalb eine Art Zwischenmarkierung bildet. Jede Zwischenmarkierung ist an der Hülle zweckmäßigerweise zwischen zwei Hauptmarkierungen angebracht. Erreicht eine Zwischenmarkierung die Aktivierungsposition, wird das Nachziehen der Hülle solange durch die die Stoppstellung einnehmende Feststellbremse vollständig unterbunden, bis der mit der Zwischenmarkierung verbundene, in der Steuerung der Fülleinrichtung eingegebene Bruchteil der Endfüllmenge eingefüllt ist. Die Schließvorrichtung wird jedoch nicht aktiviert, da die Endfüllmenge noch nicht eingefüllt ist.

Die verschiedenen Arten der Markierungen können beispielsweise in der Verwendung unterschiedlicher Farben für die Markierungen bestehen, die von der Sensoreinrichtung erfaßt und unterschieden werden können. Die Art kann jedoch auch durch unterschiedliche elektromagnetische Eigenschaften der Markierungen oder andere Unterscheidungsformen bestimmt sein.

Die Erfindung weist vorzugsweise eine Hüllbremse auf, die das Nachziehen der Hülle in einer Nachziehstellung abgebremst zuläßt und dadurch den Fülldruck erhöht, mit der die Hülle des Nahrungsmittelprodukts befüllt wird. In einer bevorzugten Ausgestaltung der Erfindung ist die Hüllbremse mit der Feststellbremse identisch bzw. in dieser integriert, so daß die Feststellbremse sowohl die Stoppstellung als auch die Nachziehstellung einnehmen kann.

Zudem können alle aufgeführten Verbindungen nicht nur direkt sondern auch indirekt über andere Bauteile der Vorrichtung verlaufen. So könnte die zweite Verbindung beispielsweise derart ausgebildet sein, daß die Fülleinrichtung das Endsignal über die Sensoreinrichtung oder die Schließvorrichtung an die Feststellbremse signalisiert. Oder die Verbindungen werden ganz oder teilweise zunächst in einer Steuerungsanlage oder einem Verteiler zusammengeführt und gehen von dort zum jeweiligen Empfänger. Zahlreiche weitere indirekte Verbindungsarten sind ebenfalls einsetzbar und können die Steuerungstechnik der Vorrichtung vereinfachen und/oder verbessern.

In einer bevorzugten Ausgestaltung der Vorrichtung weist die Fülleinrichtung ein oder mehrere weitere, nicht in einer Füllstellung befindliche Füllrohre auf. Lediglich das in Füllstellung befindliche Füllrohr ist aktiv am Füllvorgang beteiligt. Die weiteren Füllrohre werden mit einem neuen Hüllvorrat versehen und somit für den Füllvorgang vorbereitet. Sobald der Hüllvorrat des in Füllstellung befindlichen aktiven Füllrohres verbraucht ist, wird das zuvor in der Füllstellung befindliche Füllrohr aus dieser Stellung herausgebracht und eines der weiteren Füllrohre in die Füllstellung überführt. Die Umordnung der Füllrohre erfolgt vorzugsweise durch eine Schwenkbewegung. Während der Schwenkbewegung führen alle Füllrohre eine Bewegung auf einer gleichen Kreisbahn durch. Ist die Fülleinrichtung beispielsweise mit zwei Füllrohren bestückt, vollziehen die beiden Füllrohre während des Verschwenkens eine kreisförmige Bewegung um 180° auf der gleichen Kreisbahn.

In einer vorteilhaften Ausgestaltung weist die Sensoreinrichtung wenigstens zwei Sensoren auf, die vorzugsweise voneinander im wesentlichen gleichmäßig um das Füllrohr beabstandet sind. Weist die Sensoreinrichtung zwei Sensoren auf, liegen sich diese bevorzugt genau gegenüber. Durch die Anordnung von wenigstens zwei Sensoren in Verbindung mit einer vollständig umlaufenden Markierung auf der Hülle kann die Sensoreinrichtung mit Vorteil so geschaltet sein, daß erst dann ein Aktivierungssignal abgegeben wird, wenn alle Sensoren die Markierung erkennen. Hierdurch ist sichergestellt, daß die Sensoreinrichtung nicht fälschlicherweise auf der Hülle befindliche Strukturen oder Farben, insbesondere einen auf der Hülle befindlichen anderen Druck, als Markierung erkennt.

Die Sensoren sind vorzugsweise von dem Füllrohr weg und auf dieses zu bewegbar ausgebildet. Hierdurch ist das Beschicken des Füllrohres mit einem neuen Hüllvorrat vereinfacht. Weist die Fülleinrichtung mehr als ein Füllrohr auf, wobei sämtliche Füllrohre auf einer gleichen Kreisbahn verschwenkbar ausgebildet sind. So sind die Sensoren der Sensoreinrichtung jeweils von dem in Füllstellung befindlichen Füllrohr weg und außerhalb der Kreisbahn der Füllrohre verbringbar. Hierdurch stören die Sensoren das Verschwenken der Füllrohre nicht. Die Sensorbeweglichkeit kann selbstverständlich auch bei einer Ausgestaltung der Sensoreinrichtung mit nur einem Sensor vorsehbar sein.

Weitere Vorteile und Einzelheiten der Erfindung ergeben sich aus den Unteransprüchen und dem im folgenden beschriebenen schematisch in den Zeichnungen dargestellten Ausführungsbeispiel. Es zeigen:
- Fig. 1: eine erfindungsgemäße Vorrichtung in teilweise geschnittener Darstellung zu Beginn der Herstellung eines Nahrungsmittelprodukts,
- Fig. 2: Vorrichtung gemäß Fig. 1 bei weiter fortgeschrittener Befüllung,
- Fig. 3: Vorrichtung gemäß Fig. 1 mit der Feststellbremse in Stoppstellung,
- Fig. 4: Vorrichtung gemäß Fig. 3 mit radial gedehnter Hülle des Nahrungsmittel produkts,
- Fig. 5: Vorrichtung gemäß Fig. 4 mit der Feststellbremse in Nachziehstellung und
- Fig. 6: Vorrichtung gemäß Fig. 5 beim Verschließen und voneinander Abtrennen des Endes der zuvor befüllten sowie des Anfangs der als nächstes zu füllenden Hülle.

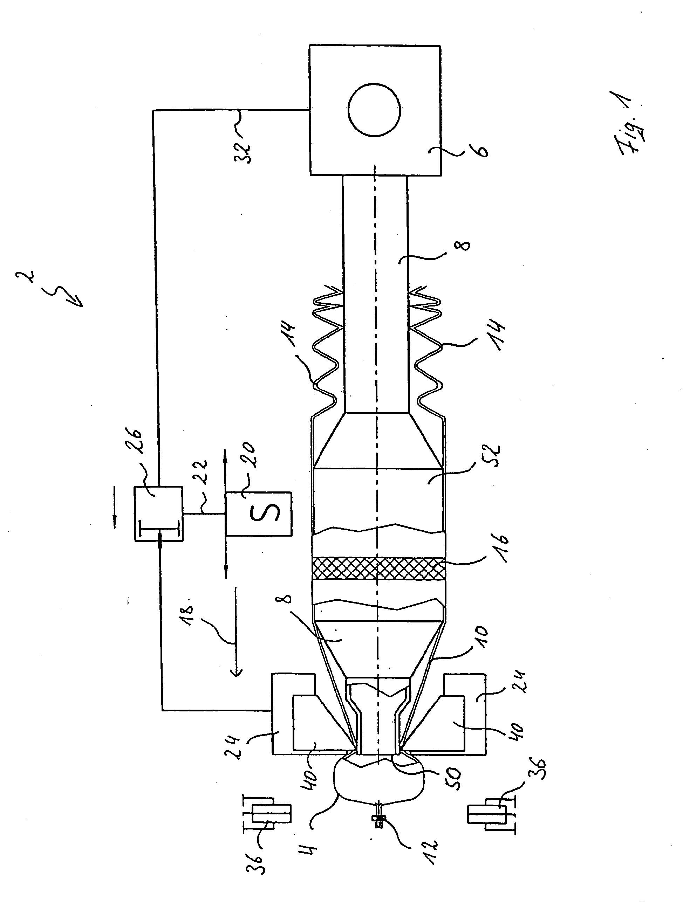

Die Figuren 1 bis 6 zeigen insgesamt eine erfindungsgemäße Vorrichtung 2 in aufeinander folgenden Arbeitsstellungen während der Herstellung eines Nahrungsmittelprodukts 4 und veranschaulichen somit auch eine Ausgestaltung des erfindungsgemäßen Verfahrens. Der Beginn der Herstellung des Nahrungsmittelprodukts 4 ist in Fig. 1 dargestellt. Die Vorrichtung weist eine Fülleinrichtung 6 mit einem Füllrohr 8 auf, aus dem in den Zeichnungen nicht dargestelltes Füllgut in eine schlauchförmige Hülle 10 mit verschlossenem Anfang 12 eingefüllt wird.

Das Füllgut hat dabei eine pastöse Konsistenz, wobei pastös in dem Sinne zu verstehen ist, daß das Füllgut innerhalb eines Nahrungsmittelprodukts 4 aus mehreren Teilen besteht, die während des Befüllens der Hülle 10 aneinander vorbeigleiten können. Die Teile können auch fest sein. Das Füllgut kann z.B. Wurstbrät oder eine andere breiartige Masse, aber auch von mehlartiger, körniger oder erbsenartiger Konsistenz sowie Größe sein.

Während des Befüllens der Hülle 10 wird weiteres Hüllenmaterial von einem Vorrat 14 nachgezogen. Der Vorrat 14 kann ebenfalls bereits als Schlauch geformt sein und liegt dann bevorzugt in gestauchter Form vor, z.B. als Raupe, wobei ein Vorrat 14 der schlauchförmigen Hülle 10 auf das Füllrohr 8 gestülpt ist. Der Vorrat 14 kann jedoch auch von einer Flachfolie gebildet werden, die erst auf dem Füllrohr 8 zu einem Schlauch geformt und verschweißt oder verklebt wird. Letztere Variante ist in den Zeichnungen nicht dargestellt.

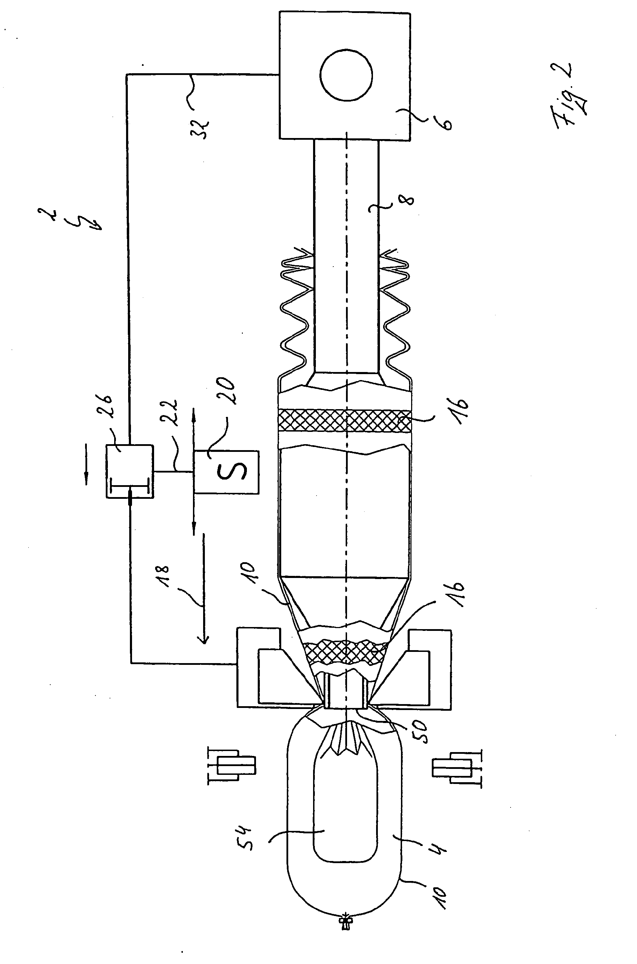

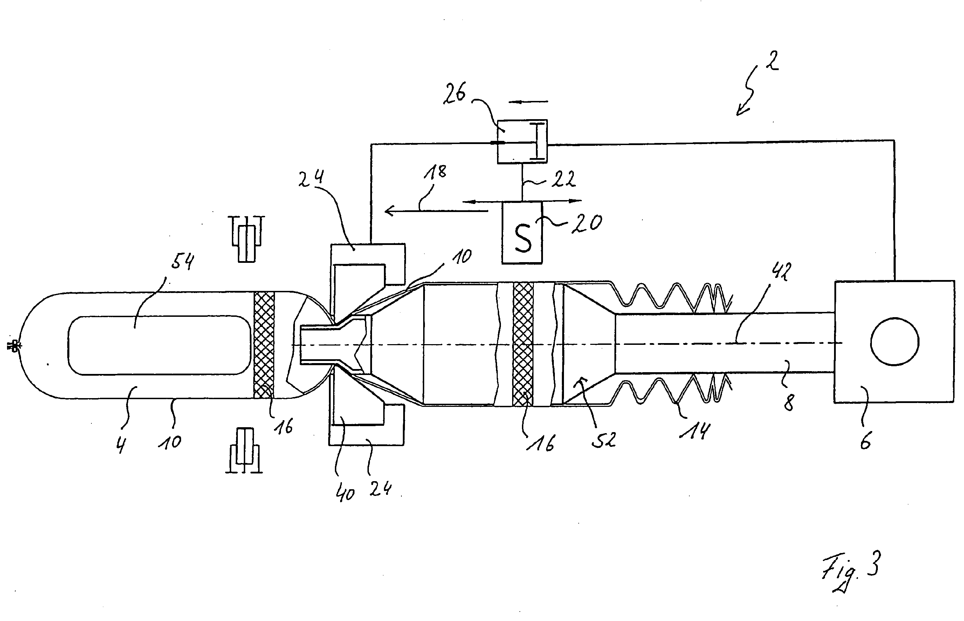

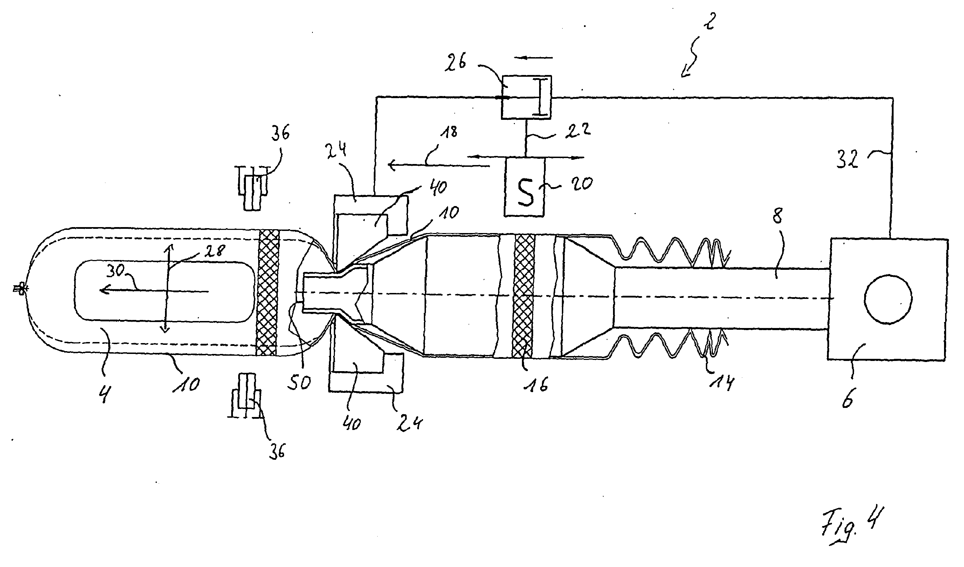

An der Hülle 10 sind in Abständen wiederkehrende Markierungen 16 angebracht, die sich während des Befüllens-der Hülle 10 in Folge deren Nachziehens in Befüllrichtung 18 auf dem Füllrohr 8 bewegen (Fig. 2). Dabei erreichen die Markierungen 16 eine Aktivierungsposition, bei der sie jeweils von einer Sensoreinrichtung 20 erkannt werden (Fig. 3). Die Sensoreinrichtung 20 gibt daraufhin über eine erste Verbindung 22 ein Aktivierungssignal an eine Feststellbremse 24 mit einem Stellglied 26 ab, woraufhin die Feststellbremse 24 eine das Nachziehen der Hülle 10 vollständig verhindernde Stoppstellung einnimmt (Figuren 3 und 4). Der Füllvorgang wird dabei nicht unterbrochen. Als Stellglied 26 sind insbesondere hydraulische oder pneumatische Zylinderanordnungen bekannter Art vorgesehen. Da in der Stoppstellung der Feststellbremse 24 kein weiteres Hüllenmaterial 10 von dem Vorrat 14 nachgezogen wird, dehnt sich die Hülle 10 des in Herstellung befindlichen Nahrungsmittelprodukts 4. Die Dehnung der Hülle 10 ist in Fig. 4 durch die vorherige Form des Nahrungsmittelprodukts 4 mit einer gestrichelten Linie und der anschließend im Durchmesser erweiterten Form des Nahrungsmittelprodukts 4 mit einer durchgezogenen Linie veranschaulicht. Die Ausdehnung der Hülle 10 erfolgt dabei insbesondere in radialer Richtung 28 des Nahrungsmittelprodukts 4; es ist jedoch auch eine Ausdehnung in Längsrichtung 30 möglich.

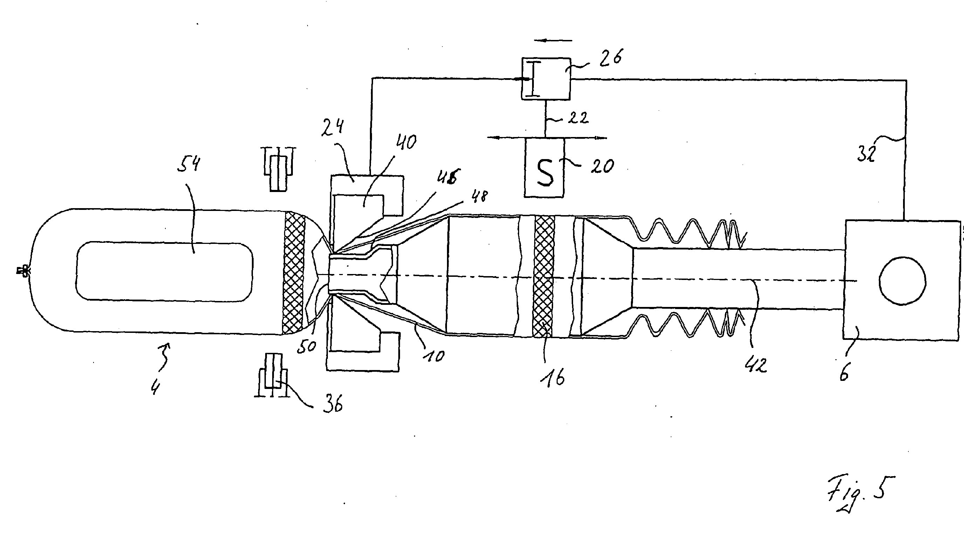

Erst wenn eine vorgegebene Füllmenge eingefüllt ist, signalisiert die Fülleinrichtung 6 der Feststellbremse 24 über eine zweite Verbindung 32 mit einem Endsignal, die Stoppstellung zu verlassen (Fig. 5).

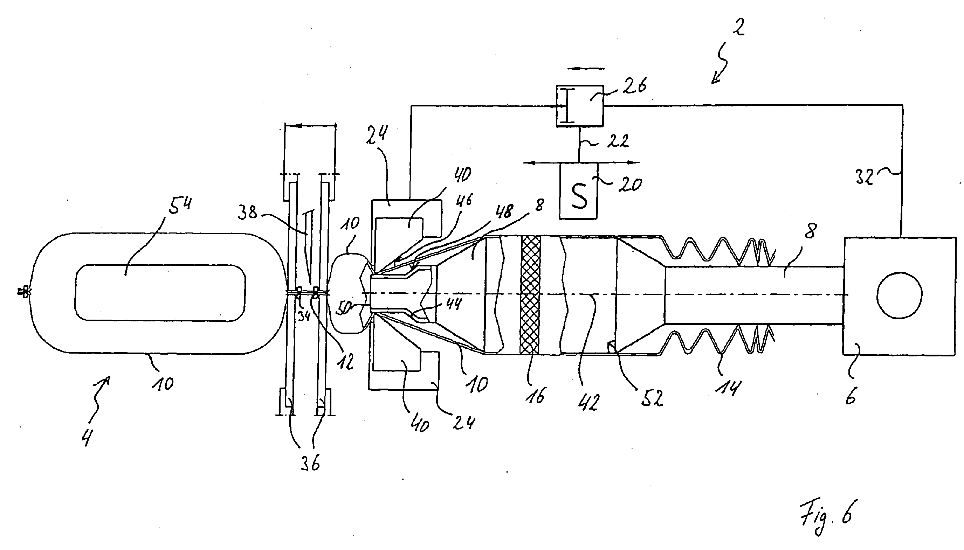

Wie in Fig. 6 dargestellt, wird abschließend das Ende 34 der zuvor befüllten Hülle 10 sowie der Anfang 12 der als nächstes zu füllenden Hülle 10 verschlossen. Hierzu wird bevorzugt eine Schließvorrichtung 36 verwendet, die im Doppel-Clip-Verfahren arbeitet. Es sind jedoch auch andere übliche Schließvorrichtungen einsetzbar. Das Ende 34 der zuvor befüllten Hülle 10 und der Anfang 12 der als nächstes zu füllenden Hülle 10 können miteinander verbunden bleiben oder sie werden mit Hilfe eines Trennmessers 38 voneinander getrennt.

Um das Nachziehen der Hülle 10 während des Befüllens abzubremsen, kann die Vorrichtung eine Hüllbremse aufweisen, die das Nachziehen in einer Nachziehstellung abbremst, aber nicht stoppt. Bevorzugt ist die Hüllbremse mit der Feststellbremse 24 identisch, wie in den Figuren dargestellt. Die Feststellbremse 24 kann dann sowohl die Nachziehstellung (Figuren 1 und 2 sowie Figuren 5 und 6) als auch die Stoppstellung (Figuren 3 und 4) einnehmen.

Die Feststellbremse 24 weist ein Andruckelement 40 auf, das in der Nachziehstellung die Hülle 10 radial auf das Füllrohr 8 drückt. Zur Einnahme der Stoppstellung ist das Andruckelement 40 parallel zur Längsachse 42 des Füllrohrs 8 in Richtung auf einen Anlagebereich 44 des Füllrohrs 8 beweglich ausgebildet und drückt in der Stoppstellung die Hülle 10 auf diesen Anlagebereich 44 (Figuren 3 und 4). Dabei ist das Andruckelement 40 bevorzugt ringförmig ausgebildet und weist eine Andruckfläche 46 auf, die mit Vorteil im wesentlichen parallel zu einer Anlagefläche 48 des Anlagebereichs 44 angeordnet ist und in der Stoppstellung flächig auf die Anlagefläche 48 trifft, wobei die Andruckfläche 46 und die Anlagefläche 48 bevorzugt jeweils konisch ausgebildet sind.

Während der Bewegung des Andruckelementes 40 von der Nachziehstellung der Feststellbremse 24 in die Stoppstellung und anschließend wieder zurück wird gleichzeitig im Füllgutstrom außen befindliches Füllgut im Bereich einer Mündung 50 des Füllrohrs 8 in das Wurstinnere befördert. Durch diesen Vorgang, der im Bereich der Wurstherstellung als Umkrempeln des Füllgutes bzw. der Wurstmasse bezeichnet wird, kann eine unerwünschte durch Fett verursachte Schlierenbildung im Inneren des Nahrungsmittelprodukts 4 unmittelbar unterhalb der Hülle 10 wirksam verhindert werden.

Im Bereich der Aktivierungsposition ist an dem Füllrohr 8 ein Vorentraffer 52 angeordnet, der das Hüllenmaterial 10 vor dem Vorbeiziehen an der Sensoreinrichtung 20 glättet und dadurch das Erkennen der Markierungen 16 durch die Sensoreinrichtung 20 verbessert. Dieser Vorentraffer 52 ist bevorzugt ein auf das Füllrohr 8 aufgeschobener Kern mit zylindrischem Außendruchmesser, der im wesentlichen dem Innendurchmesser des ungedehnten Hüllenmaterials 10 entspricht. Das Hüllenmaterial 10 weist einen in regelmäßigen Abständen wiederkehrenden Bilddruck 54 auf, das auf dem fertigen Nahrungsmittelprodukt 4 stets etwa den gleichen Abstand zu den Enden bzw. zu dem Anfang 12 und dem Ende 34 des Nahrungsmittelprodukts 4 hat (Fig. 6). Die Markierungen 16 können durch den Bilddruck 54 gebildet sein.

Die erste Verbindung 22 und die zweite Verbindung 32 können sowohl elektrische und/oder elektronische als auch mechanische oder hydraulische Verbindungen sein. Die Position der Sensoreinrichtung 20 ist bevorzugt im wesentlichen parallel zur Längsachse 42 des Füllrohrs 8 einstellbar. Darüber ist auch die Lage der Aktivierungsposition der Markierungen 16 wählbar und an unterschiedliche Nahrungsmittelproduktlängen anpaßbar.

## Patentansprüche

1. Vorrichtung zur Herstellung von Nahrungsmittelprodukten mit pastösem Füllgut (4), insbesondere von Würsten, mit einer Fülleinrichtung (6), aus der Füllgut durch ein Füllrohr (8) in eine anfangsseitig verschlossene, schlauchförmige Hülle (10) eingefüllt wird, wobei der sich füllende Hüllenbereich weiteres Hüllenmaterial (10) von einem Vorrat (14) nachzieht, mit einer Sensoreinrichtung (20), die an der Hülle (10) in Abständen wiederkehrende Markierungen (16) jeweils bei Erreichen einer Aktivierungsposition erkennt, wodurch die Sensoreinrichtung (20) ein Aktivierungssignal abgibt, und mit einer Schließvorrichtung (36), die nach Abschluß des Einfüllens einer Endfüllmenge das Ende (34) der zuvor befüllten sowie den Anfang (12) der als nächstes zu füllenden Hülle (10) verschließt, **gekennzeichnet durch** eine Feststellbremse (24), die eine das Nachziehen der Hülle (10) vollständig verhindernde Stoppstellung einnehmen kann, und eine erste Verbindung (22) zwischen der Sensoreinrichtung (20) und der Feststellbremse (24), über die die Feststellbremse (24) **durch** das Aktivierungssignal veranlaßt wird, die Stoppstellung solange einzunehmen, bis die Fülleinrichtung (6) der Feststellbremse (24) mit einem Endsignal über eine zweite Verbindung (32) den Abschluß des Einfüllens einer vorgebbaren Füllmenge signalisiert, wobei die vorgebbare Füllmenge der Endfüllmenge oder Teilen davon entspricht.

2. Vorrichtung nach Anspruch 1, **dadurch gekennzeichnet, daß** die Feststellbremse (24) ein Andruckelement (40) aufweist, das in der Stoppstellung die Hülle (10) kraftbeaufschlagt auf einen Anlagebereich (44) des Füllrohrs (8) drückt.

3. Vorrichtung nach Anspruch 2, **dadurch gekennzeichnet, daß** das Andruckelement (40) das Füllrohr (8) ringförmig umgibt.

4. Vorrichtung nach einem der Ansprüche 2 oder 3, **dadurch gekennzeichnet, daß** das Andruckelement (40) im wesentlichen parallel zur Längsachse (42) des Füllrohrs (8) verschiebbar ausgebildet ist und in der Stoppstellung die Hülle (10) in Verschieberichtung kraftbeaufschlagt gegen den Anlagebereich (44) des Füllrohrs (8) drückt.

5. Vorrichtung nach Anspruch 4, **dadurch gekennzeichnet, daß** das Andruckelement (40) eine Andruckfläche (46) und der Anlagebereich (44) eine Anlagefläche (48) aufweist, wobei die Andruckfläche (46) im wesentlichen parallel zur Anlagefläche (48) angeordnet ist.

6. Vorrichtung nach Anspruch 5, **dadurch gekennzeichnet, daß** die Andruckfläche (46) und die Anlagefläche (48) konisch ausgebildet sind.

7. Vorrichtung nach einem der Ansprüche 1 bis 6, **gekennzeichnet durch** eine Hüllbremse, die das Nachziehen der Hülle (10) in einer Nachziehstellung abgebremst zuläßt.

8. Vorrichtung nach Anspruch 7, **dadurch gekennzeichnet, daß** die Feststellbremse (24) mit der Hüllbremse identisch ist und sowohl die Stoppstellung als auch die Nachziehstellung einnehmen kann.

9. Vorrichtung nach einem der Ansprüche 2 bis 8, **dadurch gekennzeichnet, daß** das Andruckelement (40) das Füllrohr (8) ringförmig umgibt und das Andruckelement (40) derart variabel ausgestaltet ist, daß sein Innendurchmesser einstellbar ist.

10. Vorrichtung nach einem der Ansprüche 1 bis 9, **dadurch gekennzeichnet, daß** die Fülleinrichtung (6) eine Steuerung für die Füllmenge aufweist und die Steuerung mit der Feststellbremse (24) über die zweite Verbindung (32) verbunden ist.

11. Vorrichtung nach Anspruch 10, **dadurch gekennzeichnet, daß** die Sensoreinrichtung (20) mit der Steuerung über eine dritte Verbindung verbunden ist.

12. Vorrichtung nach Anspruch 11, **dadurch gekennzeichnet, daß** an der Hülle (10) verschiedene Arten von Markierungen (16) angebracht sind, und daß die Sensoreinrichtung (20) zur Erkennung der Art der Markierung (16) ausgebildet ist und über die dritte Verbindung an die Steuerung die Art der Markierung (16) signalisiert, mit der in der Steuerung eine bestimmte Füllmenge verknüpft ist.

13. Vorrichtung nach einem der Ansprüche 1 bis 12, **dadurch gekennzeichnet, daß** die Sensoreinrichtung (20) parallel zur Längsachse (42) des Füllrohrs (8) beweglich ausgebildet ist.

14. Vorrichtung nach einem der Ansprüche 1 bis 13, **dadurch gekennzeichnet, daß** das Hüllenmaterial (10) einen in regelmäßigen Abständen wiederkehrenden Bilddruck (54) aufweist.

15. Vorrichtung nach einem der Ansprüche 1 bis 14, **dadurch gekennzeichnet, daß** die Fülleinrichtung (6) ein oder mehrere weitere, nicht in einer Füllstellung befindliche Füllrohre aufweist.

16. Vorrichtung nach einem der Ansprüche 1 bis 15, **dadurch gekennzeichnet, daß** die Sensoreinrichtung (20) wenigstens zwei voneinander beabstandete Sensoren aufweist.

17. Vorrichtung nach Anspruch 16, **dadurch gekennzeichnet, daß** die Sensoren der Sensoreinrichtung (20) jeweils von dem Füllrohr (8) weg und auf dieses zu bewegbar ausgebildet sind.

18. Verfahren zur Herstellung von Nahrungsmittelprodukten mit pastösem Füllgut (4), insbesondere von Würsten, wobei das Füllgut in eine anfangsseitig verschlossene, schlauchförmige Hülle (10) eingefüllt wird, die eine Bewegung in Befüllrichtung (18) von der Einfüllstelle weg ausführend weiteres Hüllenmaterial (10) nachzieht, und an der Hülle (10) in Abständen Markierungen (16) angebracht sind, die im Verlauf der Bewegung der Hülle (10) in Befüllrichtung (18) eine Aktivierungsposition erreichen, bei der nach Abschluß des Einfüllens einer Endfüllmenge das Ende (34) der zuvor befüllten sowie der Anfang (12) der als nächstes zu füllenden Hülle (10) verschlossen werden, **dadurch gekennzeichnet, daß** das Nachziehen der schlauchförmigen Hülle (10), wenn die Markierung (16) die Aktivierungsposition erreicht, solange gestoppt und der Füllvorgang fortgesetzt wird, bis eine vorgebbare Füllmenge erreicht ist, wobei die vorgebbare Füllmenge der Endfüllmenge oder Teilen davon entspricht.

19. Verfahren nach Anspruch 18, **dadurch gekennzeichnet, daß** eine Hülle (10) mit verschiedenen, voneinander unterscheidbaren Arten von Markierungen (16) verwendet wird, wobei die Art der Markierung (16) jeweils von dem Abstand zu wenigstens einer weiteren Markierung (16) abhängt, und daß die jeweilige Füllmenge in Abhängigkeit von der Art der Markierung (16) vorgegeben wird.

20. Verfahren nach einem der Ansprüche 18 oder 19, **dadurch gekennzeichnet, daß** der Füllvorgang erst beendet wird, wenn die vorgegebene Füllmenge einer einstellbaren Endfüllmenge des Nahrungsmittelprodukts (4) entspricht.

21. Verfahren nach einem der Ansprüche 18 bis 20, **dadurch gekennzeichnet, daß** die Hülle (10), während ihre Nachziehbewegung gestoppt wird, bei fortgesetztem Füllvorgang gedehnt wird.

## Claims

1. A device for producing foodstuff products with pasty feedstock (4), particularly sausages, with a feeding device (6) from which feedstock is fed through a feed tube (8) into a hose-shaped casing (1) sealed on the start side, wherein the area of the casing being filled draws further casing material (10) from a store (14), with a sensor device (20) which detects on the casing (10) markings (16) that recur at intervals whenever an activation position is reached, whereby the sensor device (20) emits an activation signal, and with a sealing device (36) which, after a final filling quantity is fed, seals the end (34) of the pre-filled casing and the start (12) of the next casing (10) to be filled, **characterised by** a stopping brake (24), which may assume a stop position that completely prevents the subsequent drawing of the casing (10), and a first connection (22) between the sensor device (20) and the stopping brake (24) by means of which the stopping brake (24) is caused by the activation signal to assume the stop position until the feeding device (6) signals to the stop brake (24), with an end signal via a second connection (32), the end of feeding of a feeding quantity that can be predetermined, wherein the feeding quantity that can be predetermined is equal to the final feeding quantity of fractions thereof.

2. The device according to claim 1, **characterised in that** the stopping brake (24) exhibits a contact pressure element (40) which, in the stop position, presses the casing (10), loaded by a force, onto a contact area (44) of the feed tube (8).

3. The device according to claim 2, **characterised in that** the contact pressure element (40) annularly surrounds the feed tube (8).

4. The device according to any one of claims 2 or 3, **characterised in that** the contact pressure element (40) is formed essentially parallel with the longitudinal axis (42) of the feed tube (8) so that it is displaceable, and **in that** in the stop position the casing (10) presses in the direction of displacement, loaded by force, against the contact area (44) of the feed tube (8).

5. The device according to claim 4, **characterised in that** the contact pressure element (40) exhibits a contact pressure surface (46) and **in that** the contact area (44) exhibits a contact surface (48), wherein the contact pressure surface (46) is arranged essentially parallel with the contact surface (48).

6. The device according to claim 5, **characterised in that** the contact pressure surface (46) and the contact surface (48) are of conical design.

7. The device according to any one of claims 1 to 6, **characterised by** a casing brake which allows the subsequent drawing of the casing (10) in a drawing position when braked.

8. The device according to claim 7, **characterised in that** the stopping brake (24) is identical to the casing brake and is able to adopt both the stopping position and the drawing position.

9. The device according to any one of claims 2 to 8, **characterised in that** the contact pressure element (40) annularly surrounds the feed tube (8) and **in that** the contact pressure element (40) is designed so variably that its inside diameter is adjustable.

10. The device according to any one of claims 1 to 9, **characterised in that** the feeding device (6) exhibits a control system for the feeding quantity and **in that** the control system is connected to the stopping brake (24) via the second connection (32).

11. The device according to claim 10, **characterised in that** the sensor device (20) is connected to the control system by a third connection.

12. The device according to claim 11, **characterised in that** different types of markings (16) are applied to the casing (10), and **in that** the sensor device (20) is designed to detect the type of marking (16) and signals, via the third connection to the control system, the type of marking (16) with which a certain feeding quantity is associated in the control system.

13. The device according to any one of claims 1 to 12, **characterised in that** the sensor device (20) is designed so that it moves parallel with the longitudinal axis (42) of the feed tube (8).

14. The device according to any of claims 1 to 13, **characterised in that** the casing material (10) exhibits a pattern (54) that recurs at regular intervals.

15. The device according to any one of claims 1 to 14, **characterised in that** the feeding device (6) exhibits one or more further feed tubes that do not adopt a feeding position.

16. The device according to any one of claims 1 to 15, **characterised in that** the sensor device (20) exhibits at least two sensors separated by a certain distance.

17. The device according to claim 16, **characterised in that** the sensors of the sensor device (20) are each designed so that they move away and back towards the feed tube (8).

18. A method for manufacturing foodstuff products with pasty feedstock (4), particularly sausages, wherein the feed stock is fed into a hose-shaped casing (10) sealed on the start side, which casing draws to it further casing material (10) as it moves in the direction of filling (18) away from the feed point, and wherein markings (16) are applied to the casing (10) at certain intervals, which markings reach an activation position in the course of the movement of the casing (10) in the direction of filling (16), whereby, after a final feed quantity has been fed, the end (34) of the pre-filled casing and the start (12) of the next casing (10) to be filled are sealed, **characterised in that** the drawing of the hose-shaped casing (10), when the marking (16) reaches the activation position, is stopped and the feed process is continued until a feed quantity that can be predetermined is reached, wherein the feed quantity that can be predetermined is equal to the final feed quantity or fractions thereof.

19. The method according to claim 18, **characterised in that** a casing (1) is used with different types of markings (16) that can be distinguished one from the other, wherein the type of marking (16) depends on the distance from at least one further marking (16), and **in that** the feed quantity concerned is predetermined according to the type of marking (16).

20. The method according to any one of claims 18 or 19, **characterised in that** the feeding process is not completed until the predetermined feed quantity is equal to an adjustable final feed quantity of the foodstuff product (4).

21. The method according to any one of claims 18 to 20, **characterised in that** the casing (10) is expanded whilst its drawing movement is stopped and the feed process continues.

## Revendications

1. Dispositif de production de produits alimentaires à charge pâteuse (4), notamment des saucisses, avec un dispositif de remplissage (6) à partir duquel la charge est versée à travers un tube de remplissage (8) dans une enveloppe en forme de gaine (10), fermée à son commencement, dans lequel la zone de l'enveloppe qui se remplit tire de la matière d'enveloppe supplémentaire (10) depuis une réserve (14), avec un dispositif de capteur (20), qui reconnaît des marquages (16) se répétant à distance sur l'enveloppe (10) chaque fois lorsqu'ils atteignent une position d'activation, le dispositif de capteur (20) émettant alors un signal d'activation, et avec un dispositif de fermeture (36) qui, après la fin du chargement d'une quantité de remplissage finale, ferme la fin (34) de l'enveloppe remplie antérieurement (10) ainsi que le commencement (12) de l'enveloppe suivante (10) à remplir, **caractérisé par** un frein d'arrêt (24), qui peut prendre une position de blocage empêchant entièrement le tirage de l'enveloppe (10), et une première liaison (22) entre le dispositif de capteur (20) et le frein d'arrêt (24), via laquelle le frein d'arrêt (24) est amené par le signal d'activation à prendre la position de blocage jusqu'à ce que le dispositif de remplissage (6) signale au frein d'arrêt (24), avec un signal de fin via une deuxième liaison (32), la fin du chargement d'une quantité de remplissage prédéterminable, la quantité de remplissage prédéterminable correspondant à la quantité de remplissage finale ou à des parties de celle-ci.

2. Dispositif selon la revendication 1, **caractérisé en ce que** le frein d'arrêt (24) comprend un élément de pression (40) qui, dans la position de blocage, applique l'enveloppe (10) sous l'effet d'une force sur une zone d'appui (44) du tube de remplissage (8).

3. Dispositif selon la revendication 2, **caractérisé en ce que** l'élément de pression (40) entoure sous la forme d'un anneau le tube de remplissage (8).

4. Dispositif selon la revendication 2 ou 3, **caractérisé en ce que** l'élément de pression (40) peut se déplacer en mouvement coulissant sensiblement parallèlement à l'axe longitudinal (42) du tube de remplissage (8) et, dans la position de blocage, presse l'enveloppe (10) contre la zone d'appui (44) du tube de remplissage (8) en appliquant une force dans la direction du mouvement coulissant.

5. Dispositif selon la revendication 4, **caractérisé en ce que** l'élément de pression (40) présente une face de pression (46) et la zone d'appui (44) présente une face d'appui (48), dans lequel la face de pression (46) est sensiblement parallèle à la face d'appui (48).

6. Dispositif selon la revendication 5, **caractérisé en ce que** la face de pression (46) et la face d'appui (48) sont coniques.

7. Dispositif selon l'une quelconque des revendications 1 à 6, **caractérisé par** un frein d'enveloppe, qui permet le tirage de l'enveloppe (10) de façon freinée dans une position de tirage.

8. Dispositif selon la revendication 7, **caractérisé en ce que** le frein d'arrêt (24) est identique au frein d'enveloppe et peut prendre aussi bien la position de blocage que la position de tirage.

9. Dispositif selon l'une quelconque des revendications 2 à 8, **caractérisé en ce que** l'élément de pression (40) entoure en forme d'anneau le tube de remplissage (8) et l'élément de pression (40) est de forme variable, de telle manière que son diamètre intérieur soit réglable.

10. Dispositif selon l'une quelconque des revendications 1 à 9, **caractérisé en ce que** le dispositif de remplissage (6) comprend une commande pour la quantité de remplissage et la commande est raccordée au frein d'arrêt (24) via la deuxième liaison (32).

11. Dispositif selon la revendication 10, **caractérisé en ce que** le dispositif de capteur (20) est raccordé à la commande via une troisième liaison.

12. Dispositif selon la revendication 11, **caractérisé en ce que** différents types de marquages (16) sont apposés sur l'enveloppe (10), et **en ce que** le dispositif de capteur (20) est conçu de façon à reconnaître le type de marquage (16) et signale à la commande, via la troisième liaison, le type du marquage (16) auquel une quantité de remplissage déterminée est liée dans la commande.

13. Dispositif selon l'une quelconque des revendications 1 à 12, **caractérisé en ce que** le dispositif de capteur (20) est conçu de façon mobile parallèlement à l'axe longitudinal (42) du tube de remplissage (8).

14. Dispositif selon l'une quelconque des revendications 1 à 13, **caractérisé en ce que** la matière de l'enveloppe (10) présente une image imprimée (54) se répétant à intervalles réguliers.

15. Dispositif selon l'une quelconque des revendications 1 à 14, **caractérisé en ce que** le dispositif de remplissage (6) comporte un ou plusieurs autres tubes de remplissage qui ne se trouvent pas dans une position de remplissage.

16. Dispositif selon l'une quelconque des revendications 1 à 15, **caractérisé en ce que** le dispositif de capteur (20) comprend au moins deux capteurs espacés l'un de l'autre.

17. Dispositif selon la revendication 16, **caractérisé en ce que** les capteurs du dispositif de capteur (20) sont conçus de façon mobile en va-et-vient par rapport au tube de remplissage (8).

18. Procédé de production de produits alimentaires à charge pâteuse (4), notamment de saucisses, dans lequel on verse la charge dans une enveloppe en forme de gaine (10), fermée à son commencement, qui tire une nouvelle matière d'enveloppe (10) en exécutant un mouvement l'éloignant du point de remplissage dans le sens de remplissage (18), et on appose sur l'enveloppe (10) des marquages (16) espacés qui, au cours du mouvement de l'enveloppe (10) dans le sens de remplissage (18), atteignent une position d'activation dans laquelle, après la fin du chargement d'une quantité de remplissage finale, on ferme la fin (34) de l'enveloppe remplie antérieurement (10) ainsi que le commencement (12) de l'enveloppe suivante (10) à remplir, **caractérisé en ce que** l'on arrête le tirage de l'enveloppe en forme de gaine (10) lorsque le marquage (16) atteint la position d'activation et on poursuit l'opération de remplissage jusqu'à ce qu'une quantité de remplissage prédéterminable soit atteinte, la quantité de remplissage prédéterminable correspondant à la quantité de remplissage finale ou à des parties de celle-ci.

19. Procédé selon la revendication 18, **caractérisé en ce que** l'on utilise une enveloppe (10) portant différents types de marquages (16), distincts les uns des autres, dans lequel le type du marquage (16) dépend de la distance à au moins un autre marquage (16), et **en ce que** la quantité de remplissage respective est prédéterminée en fonction du type du marquage (16).

20. Procédé selon la revendication 18 ou 19, **caractérisé en ce que** l'opération de remplissage n'est terminée que lorsque la quantité de remplissage prédéterminée correspond à une quantité de remplissage finale réglable du produit alimentaire (4).

21. Procédé selon l'une quelconque des revendications 18 à 20, **caractérisé en ce que** l'enveloppe (10) est allongée lorsque l'on poursuit l'opération de remplissage, pendant que son mouvement de tirage est arrêté.
